# FASCICULE DE BREVET EUROPEEN

(11) **EP 0 544 596 B1**
(45) Date de publication et mention de la délivrance du brevet: **17.04.1996**
(21) Numéro de dépôt: 92403191.7
(22) Date de dépôt: 26.11.1992
(51) Int. Cl.: G02B 6/12

(54) **Procédé de fabrication d'un guide onde optique ruban entièrement à base de polymères**
Verfahren zur Herstellung von Vollpolymer-basierten Stegwellenleitern
Method of manufacturing a completely polymer-based ridge waveguide

(30) Priorité: 27.11.1991 FR 9114662
(43) Date de publication de la demande: 02.06.1993
(73) Titulaire: FRANCE TELECOM, F-75015 Paris (FR)
(72) Inventeur: Levenson, Régine, F-92130 Issy-Les-Moulineaux (FR); Liang, Julienne, F-94260 Fresnes (FR); Carenco, Alain, F-92340 Bourg la Reine (FR); Zyss, Joseph, F-92330 Sceaux (FR)
(74) Mandataire: Warcoin, Jacques

(56) Documents cités:
- EP-A- 0 446 672
- JOURNAL OF LIGHTWAVE TECHNOLOGY. vol. 7, no. 10, Octobre 1989, NEW YORK US pages 1445 - 1453 B. L. BOOTH 'Low loss channel waveguides in polymers'
- APPLIED PHYSICS LETTERS. vol. 58, no. 9, 4 Mars 1991, NEW YORK US pages 884 - 886 P.R. ASHLEY 'Channel waveguides in electro-optic polymers using a photopolymer cladding technique'

## Description

L'invention concerne un procédé pour fabriquer des guides d'onde optique à base de matériaux polymériques.

Les fibres optiques sont utilisées non seulement pour la transmission de l'information, mais aussi pour traiter l'information au sens très large du terme. C'est ainsi qu'en associant un guide d'ondes optiques à des circuits optiques intégrés, on peut réaliser des fonctions de modulation, de commutation, de multiplexage, de repolarisation, etc.

Classiquement, les guides optiques à confinement latéral sont réalisés à la surface d'un monocristal de niobate de lithium, par dopage du cristal, généralement avec du titane introduit par diffusion thermique. La région dopée voit son indice de réfraction augmenter et devient donc guidante pour la lumière dans une certaine gamme de longueurs d'onde.

Les structures guidantes déjà utilisées sont notamment des structures du type :
- "photobleaching", où le principe est basé sur l'abaissement de l'indice de réfraction du polymère actif après insolation aux ultra-violets ;
- "SPP", dans lesquelles un ruban métallique est déposé sur la couche active. Les molécules actives situées dans le matériau sont orientées par l'application d'un champ électrique entre ce ruban et le substrat. Sous la bande métallique l'indice extraordinaire est augmenté alors que l'indice ordinaire est diminué par effet Pockels. La partie de la couche active située sous le ruban métallique devient ainsi un guide optique pour une onde TM (polarisé dans le plan de la couche) ;
- "Channel waveguides", dans lesquelles la lumière est confinée dans le polymère actif, au-dessus de la partie creusée de la couche tampon, par variation de l'indice effectif dans cette zone.

Les structures décrites ci-dessus présentent toutes le même inconvénient : le confinement latéral est mauvais, car il est dû à de relativement faibles différences d'indice (de l'ordre de 5 x 10⁻³). La présente invention concerne une nouvelle technique de fabrication de guides d'onde optique, permettant des différences d'indice de réfraction très grandes de part et d'autre du guide ruban actif et améliorant le confinement latéral par réduction des pertes de lumière : la différence d'indice de réfaction (0,01 < Δn < 0,4) est variable en fonction des différents matériaux utilisés. Cette qualité du confinement latéral est fondamentale lorsque l'on s'oriente vers des composants plus complexes. En effet, sur des composants tels que des X électro-optiques, où les angles d'intersection des guides sont de l'ordre du degré, un mauvais confinement de l'onde lumineuse entraîne des chutes de lumière d'un guide vers l'autre, donc de la diaphonie entre les voies.

La présente invention concerne donc un procédé pour fabriquer un guide d'onde optique intégré en forme de ruban, entièrement à base de matériaux polymériques, caractérisé en ce qu'il comprend les étapes suivantes :
- le dépôt sur un substrat semi-conducteur d'une couche inférieure de polymère tampon, de bas indice de réfraction, cette couche étant ensuite stabilisée et séchée, puis recuite à une température proche de la température de transition vitreuse dudit polymère ;
- le dépôt sur la couche inférieure d'une couche d'un polymère d'indice de réfraction plus élevé destiné à constituer le futur ruban de guidage, ledit dépôt étant suivi d'un recuit destiné à stabiliser ledit polymère sans en altérer ses propriétés ;
- le dépôt d'une couche de nitrure de silicium (Si₃N₄) sur la couche de polymère ;
- le dépôt d'une couche de résine photosensible sur la couche de nitrure, puis le transfert de la géométrie du ruban à former sur ladite couche de résine par photolithographie ;
- l'attaque sélective de la couche de nitrure de silicium par plasma CF₄, le ruban à former restant protégé par la résine photosentible ;
- l'attaque sélective de la résine photosensible et du polymère destiné à constituer le ruban de guidage, aux endroits où celui-ci n'est pas protégé par la couche de nitrure de silicium ;
- l'attaque de ce polymère jusqu'à ce que la couche inférieure de polymère tampon soit mise à nue ;
- l'attaque de la couche de nitrure de silicium protégeant le ruban de polymère ainsi formé ; et
- le dépôt d'une couche supérieure de polymère tampon de bas indice de réfraction sur la structure ainsi obtenue, cette couche étant ensuite recuite dans des conditions de température voisines de celles utilisées pour stabiliser le polymère constituant le ruban de guidage.

Le dépôt de la couche de nitrure de silicium est réalisé de préférence par la technique dite de plasma-sputtering. Les autres dépôts sont de préférence effectués par la technique de spin-coating.

La température de cuisson du polymère actif est de préférence supérieure à 50°C et d'une façon encore plus préférentielle voisine de 100°C.

Dans un mode préféré selon l'invention, le substrat semi-conducteur est de l'arséniure de gallium (GaAs).

En fonction de l'application souhaitée, les matériaux polymériques constituant le guide peuvent être des matériaux passifs ou bien des matériaux à propriétés électrooptiques. Par exemple, le guide ruban peut être un matériau passif, sans propriétés électrostatiques tel que le polystyrène, lorsque l'on souhaite intégrer des composants optoélectroniques, notamment pour la réalisation d'un guide optique, d'un polariseur ou d'un diviseur. En revanche, lorsque l'on souhaite intégrer un matériau possédant des propriétés électrooptiques, le procédé selon l'invention comportera une étape supplémentaire consistant en l'orientation des molécules situées dans le guide ruban pour rendre le matériau électrooptique. Dans ce cas, le guide ruban peut être un matériau possédant une non linéarité quadratique, tel que le polyméthylméthacrylate dopé avec des molécules à forte susceptibilité non linéaire, lorsqu'il s'agira d'un doubleur de fréquences, d'un modulateur, d'un commutateur, d'un complexe électrooptique, ou d'un amplificateur paramétrique ; ou bien un matériau possédant une non linéarité cubique, lorsqu'il s'agira de modulateurs de Kerr, ou de porte optique ; ou encore un matériau fluorescent, lorsqu'il s'agira de laser accordable.

Dans le cas où le guide ruban est constitué d'un matériau possédant une non linéarité quadratique, tel que le polyméthylméthacrylate dopé, ce dernier peut être dopé par l'intermédiaire de molécules actives, telles que celles décrites ci-dessous :

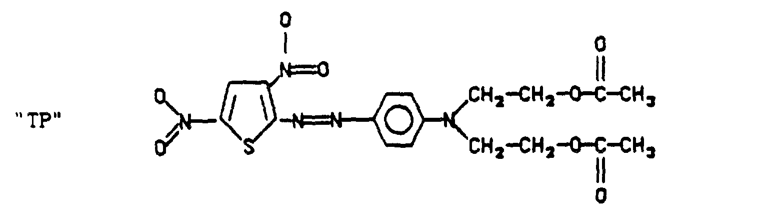

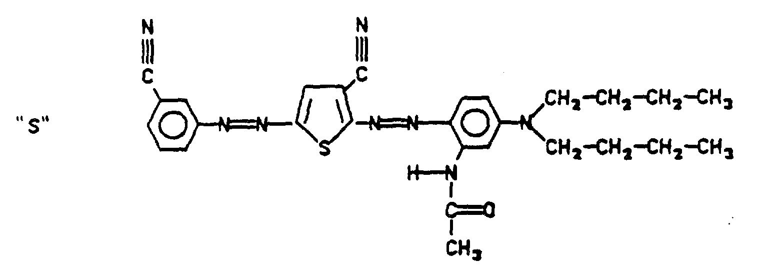

Les polymères tampons doivent être compatibles avec les différentes couches, et posséder un indice de réfraction plus faible que celui du polymère actif utilisé. Selon l'une des caractéristiques de la présente invention, la différence d'indice de réfraction entre les deux couches de polymère tampon, inférieure et supérieure, est comprise entre 0,005 et 0,5 et de préférence comprise entre 0,01 et 0,4. Par exemple, le polymère tampon constituant la couche inférieure du guide peut être le Spin On Glass (SOG), qui possède un indice de réfraction de 1,4, et le polymère tampon constituant la couche supérieure du guide, le polyméthylméthacrylate pur, qui possède un indice de réfraction de 1,49.

Le polymère actif, constituant des rubans du guide, est choisi parmi les polymères constitués de molécules possédant un moment dipolaire élevé et une susceptibilité non linéaire de deuxième ordre. Ces polymères peuvent être des polymères libres ou bien greffés.

Dans un mode préféré de l'invention le polymère actif est le polyméthylméthacrylate dopé.

Selon l'une des variantes de la présente invention, une électrode est ajoutée, soit sur toute la surface du polymère constituant la couche supérieure du guide, soit de manière sélective pour gagner en fréquence.

Selon une autre variante, le guide ne possède pas d'électrode de commande sur sa couche supérieure et peut être utilisé comme guide passif pour guider la lumière.

Le procédé selon l'invention permettra de préparer une structure guidante, dans laquelle le guide ruban est un matériau passif, ou bien un matériau possédant une non linéarité quadratique, ou bien un matériau possédant une non linéarité cubique ou encore un matériau fluorescent.

Les exemples et figures ci-après sont destinés à mettre en lumière d'autres avantages et caractéristiques de la présente invention, sans pour autant en limiter la portée.

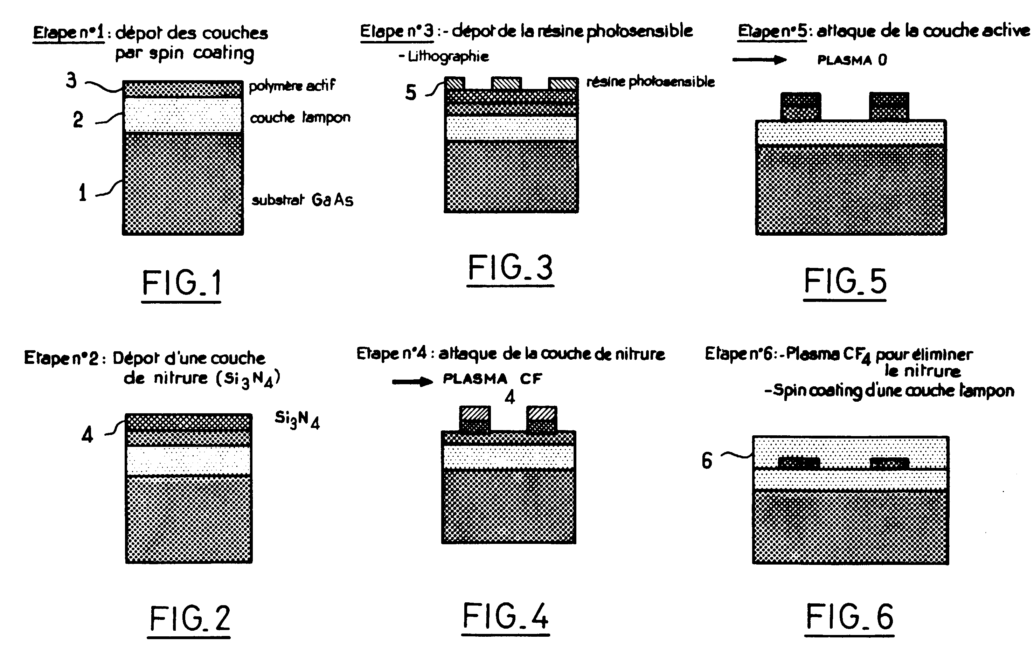

Les figures 1 à 6 illustrent un exemple de mise en oeuvre particulier du procédé selon l'invention.

### Exemple 1 : Exemple de mise en oeuvre particulier du procédé selon l'invention.

Le procédé décrit ici, permettant d'obtenir des guides d'onde optique met en oeuvre les techniques de spin coating, de photolithographie, et d'attaque ionique réactive, selon le processus suivant décomposé dans les figures numérotées de 1 à 6 :
- Figure 1 : on dépose sur un substrat semi-conducteur (1), tel que l'arséniure de Gallium, une couche de polymère (2) de bas indice, tel que du SOG, par spin coating. Cette couche est ensuite stabilisée et séchée, puis recuite à haute température (450°C pour le SOG). Du PPMA dopé, constituant le polymère actif (3) est déposé par spin coating sur la première couche, puis recuit à une température assez élevée pour stabiliser la couche en prenant soin de ne pas altérer les molécules actives. Dans cet exemple, la température est de 100°C.
- Figure 2 : une couche de nitrure de silicium (SiN₄) de 0,15 µm (4) est déposée par évaporation par la technique de plasma sputtering.
- Figure 3 : une couche de résine photosensible (5) est déposée par spin coating. La géométrie des rubans est ensuite transférée sur la résine par photolithographie.
- Figure 4 : la couche de nitrure de silicium (4) est sélectivement attaquée par attaque plasma CF₄. L'attaque s'arrête donc au niveau de la couche de polymère actif (3), et les rubans sont protégés par la résine photosensible.
- Figure 5 : la couche du polymère actif est ensuite attaquée sélectivement par plasma O₂. Le polymère actif est donc attaqué aux emplacements ou celui-ci n'est pas protégé par la couche de nitrure de silicium. La vitesse d'attaque du polymère étant connue (0,1 µm/mm), on arrête l'attaque dès que la couche inférieure est mise à nue.
- Figure 6 : une dernière attaque plasma élimine la couche de nitrure de silicium protégeant les rubans de polymère actif. Une couche de polymère de bas indice (6) est ensuite déposée par spin-coating sur la structure. Cette couche est recuite à la même température que celle de la couche active.

### Exemple 2 : Orientation des molécules

Les molécules du polymère actif peuvent être orientées pour rendre le matériau électrooptique. Cette orientation peut être effectuée par décharge corona, sous application d'un champ électrostatique élevé, de l'ordre de 100 V/µm, pendant trente minutes à une température proche de la température de transition vitreuse, puis le champ est maintenu alors que la couche est refroidie jusqu'à température ambiante.

### Exemple 3 : Utilisation de la structure guidante dans un modulateur de phase.

Une onde polarisée à 45°C est couplée dans le guide optique par l'intermédiaire d'un champ électrique appliqué aux bornes du matériau actif, puis le déphasage est modulé entre les polarisations TE et TM détectées à la sortie du guide après un polariseur croisé.

Les pertes de propagation dans cette structure ont été évaluées de l'ordre de 1 à 2 dB/cm. Le coefficient électrooptique du polymère utilisé est 7 pm/V ce qui conduit à une tension de 20V pour une électrode active sur 1 cm. La géométrie des électrodes de commande est le paramètre qui détermine la limitation en bande passante. En améliorant les performances du matériau actif et en optimisant les différentes épaisseurs de couches, on peut tendre vers une tension de commande de l'ordre du volt.

Pour le même type de matériaux, en changeant simplement le masque utilisé pour la photogravure, on peut réaliser des composants tels que des modulateurs intégrés, des jonctions X électrooptiques, des coupleurs directifs, etc.

## Revendications

1. Procédé pour fabriquer un guide d'onde optique intégré en forme de ruban entièrement à base de matériaux polymériques, caractérisé en ce qu'il comprend les étapes suivantes :
- le dépôt sur un substrat semi-conducteur (1) d'une couche inférieure (2) de polymère tampon de bas indice de réfraction, cette couche étant ensuite stabilisée et séchée, puis recuite à une température proche de la température de transition vitreuse dudit polymère ;
- le dépôt sur la couche inférieure d'une couche (3) d'un polymère d'indice de réfraction plus élevé destiné à constituer le futur ruban de guidage, ledit dépôt étant suivi d'un recuit destiné à stabiliser ledit polymère sans en altérer ses propriétés ;
- le dépôt d'une couche (4) de nitrure de silicium (Si₃N₄) sur la couche de polymère (3) ;
- le dépôt d'une couche (5) de résine photosensible sur la couche de nitrure, puis le transfert de la géométrie du ruban à former sur ladite couche de résine par photolithographie ;
- l'attaque sélective de la couche de nitrure de silicium par plasma CF₄, le ruban à former restant protégé par la résine photosensible ;
- l'attaque sélective de la résine photosensible et du polymère destiné à constituer le ruban de guidage, aux endroits où celui-ci n'est pas protégé par la couche de nitrure de silicium ;
- l'attaque de ce polymère jusqu'à ce que la couche inférieure de polymère tampon soit mise à nue ;
- l'attaque de la couche de nitrure de silicium protégeant le ruban de polymère ainsi formé ; et
- le dépôt d'une couche supérieure (6) de polymère tampon de bas indice de réfraction sur la structure ainsi obtenue, cette couche étant ensuite recuite dans des conditions de température voisines de celles utilisées pour stabiliser le polymère constituant le ruban de guidage.

2. Procédé selon la revendication 1, caractérisé en ce que le substrat semi-conducteur (1) est l'arséniure de gallium (GaAs).

3. Procédé selon l'une des revendications 1 et 2, caractérisé en ce que les matériaux polymériques ont des propriétés électrooptiques.

4. Procédé selon l'une des revendications 1 à 3, caractérisé en ce que, pour rendre les matériaux électrooptiques, on oriente des molécules actives situées dans le guide ruban, notamment par décharge corona.

5. Procédé selon la revendication 4, caractérisé en ce que la décharge corona est appliquée pendant 30 minutes à une température proche de la température de transition vitreuse, puis maintenue alors que la couche est refroidie jusqu'à la température ambiante.

6. Procédé selon l'une des revendications 1 à 5, caractérisé en ce que la couche inférieure (2) de polymère tampon est déposée par la technique dite de "spin-coating".

7. Procédé selon l'une des revendications 1 à 6, caractérisé en ce que les couches inférieure (2) et supérieure (6) de polymère tampon sont constituées d'un polymère d'indice de réfraction plus faible que celui du polymère constituant le ruban de guidage.

8. Procédé selon l'une des revendications 1 à 7, caractérisé en ce que la couche inférieure (2) de polymère tampon est constituée de SOG (Spin On Glass).

9. Procédé selon l'une des revendications 1 à 8, caractérisé en ce que le polymère destiné à constituer le ruban de guidage est choisi parmi les polymères constitués de molécules possédant un moment dipolaire élevé et une susceptibilité non linéaire de deuxième ordre.

10. Procédé selon l'une des revendications 1 à 9, caractérisé en ce que le polymère destiné à constituer le ruban de guidage est le polyméthylméthacrylate dopé.

11. Procédé selon l'une des revendications 1 à 10, caractérisé en ce que le polymère destiné à constituer le ruban de guidage est déposé sur la première couche de polymère tampon par spin-coating.

12. Procédé selon l'une des revendications 1 à 11, caractérisé en ce que la couche (4) de nitrure de silicium est ajoutée par la technique dite de plasma-sputtering, et possède une épaisseur de l'ordre de 0,15 µm.

13. Procédé selon l'une des revendications 1 à 12, caractérisé en ce que la résine photosensible est ajoutée par spin-coating.

14. Procédé selon l'une des revendications 1 à 13, caractérisé en ce que la couche supérieure (6) de polymère tampon est déposée par spin-coating.

15. Procédé selon l'une des revendications 1 à 14, caractérisé en ce que la couche supérieure (6) de polymère tampon est constituée de polyméthylméthacrylate pur.

16. Procédé selon des revendications 1 à 15, caractérisé en ce que les deux couches (4, 6) de polymère tampon, inférieure et supérieure, présentent une différence d'indice de réfraction comprise entre 0,005 et 0,5 et de préférence entre 0,01 et 0,4, et de manière encore préférentielle supérieure à 0,1.

17. Procédé selon l'une des revendications 1 à 16, caractérisé en ce que une électrode métallique de commande est déposée sur la structure.

## Patentansprüche

1. Verfahren zum Herstellen eines integrierten optischen Wellenleiters in der Form eines Streifens vollständig auf der Grundlage von Polymermaterialien, dadurch gekennzeichnet, daß es die folgenden Schritte umfaßt:
- Abscheiden einer unteren Schicht (2) aus einem Pufferpolymer mit einem geringen Brechungsindex auf einem Halbleitersubstrat (1), wobei diese Schicht danach stabilisiert und getrocknet wird und dann auf eine Temperatur nahe der Temperatur des Glasübergangs dieses Polymers erhitzt wird,
- Abscheiden einer Schicht (3) aus einem Polymer mit einem höheren Brechungsindex auf der unteren Schicht, welche dafür bestimmt ist, den späteren Leiterstreifen zu bilden, wobei auf dieses Abscheiden ein Erhitzen folgt, welches dazu dient, dieses Polymer zu stabilisieren, ohne seine Eigenschaften zu verändern,
- Abscheiden einer Schicht (4) aus Siliciumnitrid (Si₃N₄) auf der Polymerschicht (3),
- Abscheiden einer Schicht (5) aus einem lichtempfindlichen Harz auf der Nitridschicht und das anschließende Übertragen der Geometrie des zu bildenden Streifens auf die Harzschicht durch Photolithographie,
- selektives Angreifen der Siliciumnitridschicht durch ein CF₄-Plasma, wobei der zu bildende Streifen durch das lichtempfindliche Harz geschützt bleibt,
- selektives Angreifen des lichtempfindlichen Harzes und des Polymers, das dafür bestimmt ist, den Leiterstreifen zu bilden, an den Stellen, wo dieses nicht durch die Siliciumnitridschicht geschützt ist,
- Angreifen dieses Polymers, bis die untere Schicht aus einem Pufferpolymer freigelegt ist,
- Ätzen der Siliciumnitridschicht, welche den so gebildeten Polymerstreifen schützt, und
- Abscheiden einer oberen Schicht (6) aus einem Pufferpolymer mit geringem Brechungsindex auf der so gewonnenen Struktur, wobei diese Schicht dann unter Temperaturbedingungen erhitzt wird, welche in der Nähe derjenigen liegen, die für das Stabilisieren des Polymers, das den Leiterstreifen bildet, verwendet wurden.

2. Verfahren nach Anspruch 1, dadurch gekennzeichnet, daß das Halbleitersubstrat (1) Galliumarsenid (GaAs) ist.

3. Verfahren nach einem der Ansprüche 1 und 2, dadurch gekennzeichnet, daß die Polymermaterialien elektrooptische Eigenschaften haben.

4. Verfahren nach einem der Ansprüche 1 bis 3, dadurch gekennzeichnet, daß man aktive Moleküle, die sich in dem Leiterstreifen befinden, insbesondere durch Koronarentladung orientiert, um die Materialien elektrooptisch zu machen.

5. Verfahren nach Anspruch 4, dadurch gekennzeichnet, daß die Koronarentladung über 30 Minuten bei einer Temperatur nahe der Temperatur des Glasübergangs angelegt wird und dann aufrechterhalten wird, während die Schicht bis auf die Umgebungstemperatur abgekühlt wird.

6. Verfahren nach einem der Ansprüche 1 bis 5, dadurch gekennzeichnet, daß die untere Schicht (2) aus einem Pufferpolymer durch die sogenannte Schleuderbeschichtungstechnik ("Spin-Coating") abgeschieden wird.

7. Verfahren nach einem der Ansprüche 1 bis 6, daß die untere (2) und die obere (6) Schicht aus einem Pufferpolymer aus einem Polymer mit einem geringeren Brechungsindex als demjenigen des Polymers, das den Leiterstreifen bildet, bestehen.

8. Verfahren nach einem der Ansprüche 1 bis 7, dadurch gekennzeichnet, daß die untere Schicht (2) des Pufferpolymers aus SOG (Spin On Glass) besteht.

9. Verfahren nach einem der Ansprüche 1 bis 8, dadurch gekennzeichnet, daß das Polymer, welches dafür bestimmt ist, den Leiterstreifen zu bilden, aus Polymeren ausgewählt ist, welche aus Molekülen bestehen, die ein hohes Dipolmoment und eine nichtlineare Suszeptibilität zweiter Ordnung aufweisen.

10. Verfahren nach einem der Ansprüche 1 bis 9, dadurch gekennzeichnet, daß das Polymer, das dafür bestimmt ist, den Leiterstreifen zu bilden, dotiertes Polymethylmethacrylat ist.

11. Verfahren nach einem der Ansprüche 1 bis 10, dadurch gekennzeichnet, daß das Polymer, welches dafür bestimmt ist, den Leiterstreifen zu bilden, auf der ersten Schicht aus einem Pufferpolymer durch Schleuderbeschichtung abgeschieden wird.

12. Verfahren nach einem der Ansprüche 1 bis 11, dadurch gekennzeichnet, daß die Siliciumnitridschicht (4) durch die sogenannte Plasmasputter-Technik aufgebracht wird und eine Dicke von der Größenordnung von 0,15 µm besitzt.

13. Verfahren nach einem der Ansprüche 1 bis 12, dadurch gekennzeichnet, daß das lichtempfindliche Harz durch Schleuderbeschichtung aufgebracht wird.

14. Verfahren nach einem der Ansprüche 1 bis 13, dadurch gekennzeichnet, daß die obere Schicht (6) aus einem Pufferpolymer durch Schleuderbeschichtung abgeschieden wird.

15. Verfahren nach einem der Ansprüche 1 bis 14, dadurch gekennzeichnet, daß die obere Schicht (6) aus einem Pufferpolymer aus reinem Polymethylmethacrylat besteht.

16. Verfahren nach einem der Ansprüche 1 bis 15, dadurch gekennzeichnet, daß die zwei Schichten (4, 6) aus einem Pufferpolymer, die obere und die untere, einen Unterschied des Brechungsindex aufweisen, der zwischen 0,005 und 0,5 und vorzugsweise zwischen 0,01 und 0,4 und noch stärker bevorzugt bei 0,1 liegt.

17. Verfahren nach einem der Ansprüche 1 bis 16, dadurch gekennzeichnet, daß eine metallische Steuerelektrode auf der Struktur abgeschieden wird.

## Claims

1. Method of manufacturing an integrated optical waveguide strip entirely based on polymer materials characterised in that it comprises the following steps:
- depositing onto a semiconductor substrate (1) a lower layer (2) of low refractive index buffer polymer which is thereafter stabilised and dried and then cured at a temperature close to the glass transition temperature of said polymer;
- depositing onto the lower layer a layer (3) of polymer having a higher refractive index adapted later to constitute the waveguide strip, followed by curing to stabilise said polymer without degrading its properties;
- depositing a layer (4) of silicon nitride (Si₃N₄) onto the polymer layer (3);
- depositing a layer (5) of photosensitive resin onto the nitride layer and then transferring the geometry of the strip to be formed to said resin layer by photolithography;
- selectively etching the silicon nitrode layer with CF₄ plasma, the strip to be formed being protected by the photosensitive resin;
- selectively etching the photosensitive resin and the polymer that will form the waveguide strip at the locations where the latter is not protected by the silicon nitride layer;
- etching the polymer until the lower buffer polymer layer is exposed;
- etching the silicon nitride layer protecting the polymer strip formed in this way; and
- depositing an upper layer (6) of low index buffer polymer onto the resulting structure which is then cured at a temperature similar to that used to stabilise the polymer constituting the waveguide strip.

2. Method according to claim 1 characterised in that the semiconductor (1) of the substrate is gallium arsenide (GaAs).

3. Method according to claim 1 or claim 2 characterised in that the polymer materials have electro-optical properties.

4. Method according to any one of claims 1 to 3 characterised in that to render the materials electro-optical the active molecules in the guide strip are oriented, for example by corona discharge.

5. Method according to claim 4 characterised in that the corona discharge is applied for 30 minutes at a temperature near the glass transition temperature which is then maintained while the layer is cooled to ambient temperature.

6. Method according to any one of claims 1 to 5 characterised in that the lower buffer polymer layer (2) is deposited by the spin coating technique.

7. Method according to any one of claims 1 to 6 characterised in that the lower (2) and upper (6) buffer polymer layers comprise a polymer whose refractive index is lower than that of the polymer constituting the waveguide strip.

8. Method according to any one of claims 1 to 7 characterised in that the lower buffer polymer layer (2) is of SOG (Spin On Glass).

9. Method according to any one of claims 1 to 8 characterised in that the polymer that will constitute the waveguide strip is selected from polymers made up of molecules having a high dipolar moment and a second order non-linear susceptibility.

10. Method according to any one of claims 1 to 9 characterised in that the polymer that will constitute the waveguide strip is doped polymethylmethacrylate.

11. Method according to any one of claims 1 to 10 characterised in that the polymer that will constitute the waveguide strip is spin coated onto said first layer of buffer polymer.

12. Method according to any one of claims 1 to 11 characterised in that the silicon nitride layer (4) is deposited by plasma sputtering and is approximately 0.15 µm thick.

13. Method according to any one of claims 1 to 12 characterised in that the photosensitive resin is added by spin coating.

14. Method according to any one of claims 1 to 13 characterised in that the upper buffer polymer layer (6) is deposited by spin coating.

15. Method according to any one of claims 1 to 14 characterised in that the upper buffer polymer layer (6) is pure polymethylmethacrylate.

16. Method according to any one of claims 1 to 15 characterised in that the upper and lower buffer polymer layers have a difference in refractive index between 0.005 and 0.5 and preferably between 0.01 and 0.4 and even more preferably greater than 0.1.

17. Method according to any one of claims 1 to 16 characterised in that a metal control electrode is deposited on said structure.
